# EUROPEAN PATENT SPECIFICATION

(11) **EP 0 604 122 B1**
(45) Date of publication and mention of the grant of the patent: **22.04.1998**
(21) Application number: 93310177.6
(22) Date of filing: 16.12.1993
(51) Int. Cl.: G11B 5/704, G11B 5/64

(54) **Magnetic recording media and manufacturing methods thereof**
Magnetische Aufzeichnungsmedia und Verfahren zu ihren Herstellung
Milieux d'enregistrement magnétique et méthodes de leurs fabrication

(30) Priority: 25.12.1992 JP 357982/92
(43) Date of publication of application: 29.06.1994
(73) Proprietor: MATSUSHITA ELECTRIC INDUSTRIAL CO., LTD., Kadoma-shi, Osaka-fu, 571 (JP)
(72) Inventor: Maezawa, Yoshiharu, Shiga-gun, Shiga, 520-05 (JP); Honda, Kazuyoshi, Takatsuki-shi, Osaka, 569 (JP)
(74) Representative: Crawford, Andrew Birkby

(56) References cited:
- EP-A- 0 277 783
- US-A- 4 816 933
- US-A- 5 091 225

## Description

### BACKGROUND OF THE INVENTION

The present invention relates to recording media for storage of information which are utilized in video equipment and information equipment as well.
More specifically, it relates to thin film magnetic recording media which have a structure of a magnetic thin film disposed on a polymer film surface.

In step with the development of information society, the recent technological progress in the magnetic recurding media has been remarkable as exemplified by improvements in magnetic recording density.

One of the prior arts of the magnetic recording media is a so called coating type magnetic recording medium which has been widely used as the magnetic tapes for audio equipment and video cassette recorders. and is prepared by coating a mixture containing such magnetic powders as gamma iron oxide powder, chromium oxide powder, pure iron powder or the like, some abrasives, and a binder such as resin or the like on a polymer film.

Another prior art of the magnetic recording media is a thin film magnetic recording medium which is intended for improving the performance of the aforementioned coating type magnetic recording medium in terms of coercive force, magnetic recording density, electromagnetic conversion characteristics or the like, and is prepared by disposing such magnetic metal compounds as iron, cobalt, nickel, chromium and the like either alone or in the form of an alloy thereof, and compounds thereof (an oxide and a nitride, for example) on a glass substrate, an aluminum substrate or a polymer film substrate.

Still another prior art of the magnetic recording media is a thin film type magnetic recording medium for video cassette recorders which is prepared by disposing a ferromagnetic metal compound film on a polymer film surface by means of an oblique vacuum deposition method to improve the running characteristics of the magnetic recording medium.

The conventional production method for the foregoing thin film magnetic medium is first to attach inorganic particles to a flat film surface of a polymer like polyethylene-terephthalate, for example, and then dispose a magnetic metal compound on the surface thereof by means of an oblique vacuum deposition method with an incident angle ranging from 90° to 40°.

Fig. 7 shows schematically an enlarged cross-sectional view of the foregoing conventional magnetic recording medium. In Fig. 7, inorganic particles 102 of 20 nm in an average particle diameter are attached on a flat surface of a polymer film 101, and further a magnetic film 103 is disposed thereon by means of a vacuum deposition method.

In the case wherein a magnetic recording medium formed of a composite polymer film prepared by attaching inorganic particles to a polymer film surface as shown in the foregoing example of the prior art is used as a reproducing tape of magnetically recorded pictures for a video cassette recorder, the running performance and durability of the tape will be improved, but new problems will be created. More specifically, the inorganic particles tend to stick together and what was stuck together turns to irregular projections formed on the surface of the magnetic recording tape.

As a result, such new problems as deteriorated electromagnetic conversion characteristics, disturbances in the picture images and quality due to an increased drop out, unusual wear of the tape surface, uneven wear of a recording and reproducing head or the like.

Examples of the prior art described generally above are shown in JP-A-58/68227 and US-A-4,550,049.

The present invention provides a magnetic recording medium comprising a composite polymer film formed of a flat surfaced polymer film and both inorganic particles and organic particles dispersed and attached on the surface of said polymer film; and a magnetic film disposed on same surface of said composite polymer film as said particles.

The invention also provides a magnetic recording medium comprising a composite polymer film formed of a flat surfaced polymer film, a metal compound thin film disposed on the surface of said polymer film and both inorganic particles and organic particles disposed on the surface of said metal compound thin film by uniform dispersion and attachment thereof; and a magnetic film disposed over said particles which are attached on the surface of said metal compound film.

The invention further provides a magnetic recording medium comprising a composite polymer film formed of a flat surfaced polymer film and both inorganic particles and organic particles dispersed and attached on the surface of said polymer film, a nonmagnetic metal compound disposed over said particles which are formed on the surface of said composite polymer film, and a magnetic film formed on the surface of said nonmagnetic metal compound.

The present invention thus provides magnetic recording media showing such excellent performances as a high recording density as magnetic recording media for use in video equipment and information equipment as well, superior running characteristics when used as magnetic recording tapes, and good picture characteristics when used with video cassette recorders all in a balanced manner, and also achieving good long-term reliability without incurring deterioration in any of the aforementioned abilities over a long period.

The present invention also provides a manufacturing method of magnetic recording media comprising the steps of disposing inorganic particles and organic particles by uniform dispersion and attachment thereof on the surface of a flat surfaced polymer film, and forming a magnetic film over said inorganic particles and organic particles attached on said surface of said polymer film.

The present invention still further provides a manufacturing method of magnetic recording media comprising the steps of disposing a metal compound thin film on the surface of a flat surfaced polymer film, disposing inorganic particles and organic particles by uniform dispersion and attachment thereof on the surface of said metal compound thin film, and forming a magnetic film over said inorganic particles and organic particles which are attached on the surface of the metal compound film.

When the magnetic recording media structured as described above and prepared according to the aforementioned manufacturing method are used with video cassette recorders, a remarkable effect achieving all the excellent performances in a balanced manner such as electromagnetic conversion characteristics, a drop out performance, and running characteristics of magnetic recording tapes, and also realizing good long-term reliability without causing any deterioration in the aforementioned excellent performances even after repeated use of the magnetic recording tapes can be brought about.

Particularly, the structure employed with the composite polymer film wherein inorganic particles and organic particles are dispersed and attached on a polymer film surface has contributed to gaining the aforementioned remarkable effect.

How the above particular structure works effectively is not clear yet but it is assumedly caused by the following: By applying mixed coating of inorganic particles and organic particles, 1) wear of projections of the nonorganic particles caused by repeated use is made up for by the effect brought about by the shapes of the organic particles, and 2) cohesion of particles is reduced by an increased extent of particle dispersion made possible by mixing the two kinds of particles, and further 3) addition of the organic particles contributes to intensified adhesion working between the polymer film and the inorganic substance.

On account of the manufacturing method whereby inorganic particles and organic particles are uniformly dispersed and attached on the surface of a polymer film, attachment of inorganic particles cohesively on the polymer film surface. which is considered to cause a poor drop out performance and uneven wear of heads, can be prevented, resulting in excellent performances as described in the foregoing.

### BRIEF DESCRIPTION OF THE DRAWINGS

Fig. 1 shows schematically an enlarged view of the surface of a composite polymer film, on the surface of which inorganic particles and organic particles are attached.
The composite polymer film makes an essential material for the magnetic recording media disclosed by the present invention.

Fig. 2(a) to Fig. 2(c) show some of the manufacturing steps for a magnetic recording medium of the present invention. Particularly, Fig. 2(c) shows schematically an enlarged cross-sectional view of said magnetic recording medium.

Fig. 3 shows a schematic illustration of the equipment as an exemplary embodiment of the manufacturing method for the magnetic recording media disclosed by the present invention to make a thin magnetic film used in manufacturing the magnetic recording media.

Fig. 4 shows schematically an enlarged cross-sectional view of the structure of a first exemplary embodiment of the present invention for magnetic recording media.

Fig. 5 shows schematically an enlarged cross-sectional view of the structure of a second exemplary embodiment of the present invention for magnetic recording media.

Fig. 6 shows schematically an enlarged cross-sectional view of the structure of a third exemplary embodiment of the present invention for magnetic recording media.

Fig. 7 shows schematically an enlarged cross-sectional view of the structure of a prior art magnetic recording medium.

### DETAILED DESCRIPTION OF THE INVENTION

With the help of drawings, details of the present invention will be explained hereunder.

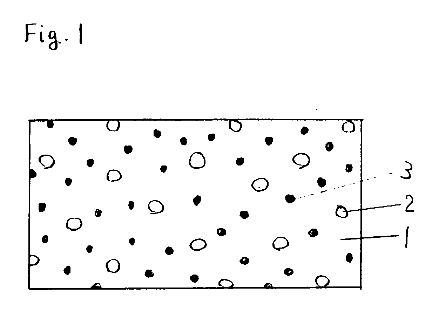

Fig. 1 shows schematically an enlarged view of the surface of a composite polymer film which makes a base material for the magnetic recording media of the present invention.

In Fig. 1, a flat surfaced polymer film 1 is used as a base material, and inorganic particles 2 and organic particles 3 are disposed by uniform dispersion and attachment thereof on the surface of said polymer film 1 to complete the composite polymer film.

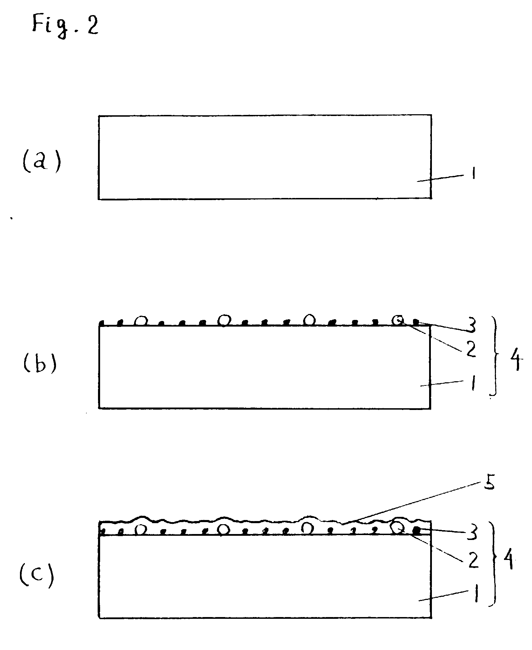

Fig. 2(a) to Fig. 2(c) show some of the manufacturing steps for a magnetic recording medium of the present invention. Particularly, Fig. 2(c) shows schematically an enlarged cross-sectional view of said magnetic recording medium.

A flat surfaced polymer film 1 as shown in Fig. 2(a) is used as a base material, and inorganic particles 2 and organic particles 3 are dispersed uniformly and attached on the surface of said polymer film 1 to complete the composite polymer film 4 as shown in Fig. 2(b), and further a magnetic film 5 disposed on the surface of said composite polymer film 4 to produce the magnetic recording medium of such structure as shown in Fig. 2(c).

There are no particular restrictions imposed on the materials for the polymer film 1, but such polymers as, for example, polyethyleneterephthalate, polythylenenaphthalate, polyimide, polyamide, polyaramid, polyvinyl chloride, polycarbonate, and the like are usually used as the materials for said polymer film 1.

There are no particular restrictions imposed on the materials for the inorganic particles 2, but oxides, nitrides and carbides or the like of such elements, for example, as silicon, titanium, aluminum, zirconium, magnesium, calcium, and the like are usually used as the materials for said inorganic particles 2.

There are no particular restrictions imposed on the configuration of the inorganic particles 2, and lump-like and also sphere-like shapes are typically taken by the inorganic particles 2.

There are no particular restrictions imposed on the size of the inorganic particles 2, but an average particle diameter of not less than 3 nm and not more than 35 nm, for example, is desirable.
In case where the average particle diameter is less than 3 nm, a remarkable effect in improving the running characteristics and the long-term reliability of the magnetic recording tapes incorporating the materials in question can not be recognized.
On the other hand, in case where the average particle diameter exceeds 35 nm, the electromagnetic conversion characteristics of the magnetic recording media incorporating the materials in question can not be much improved since the loss factor due to the spacing between tape and head becomes large.

There are no particular restrictions imposed on the materials for the organic particles 3.
Typically, such plastics and resins as polystyrene, polyacryl, polyurethane, polyethylene, polyphenylene sulfide, polysulfone epoxy resin, polyamide, polyimide, fluorocarbon resin or the like, or solid organic particles of such fatty acids and metal salts thereof as stearic acid, octyl acid, natural oil and fat or the like, or organic substances in an emulsified state are used as the materials for the organic particles 3.
There are no particular restrictions imposed on the configurations of the organic particles 3.
There are no particular restrictions imposed on the particle diameter of the organic particles 3, but an average particle diameter of 10 nm and less, for example, is preferred.
When the average particle diameter exceeds 10 nm, the size of the organic particles will become larger than that of the inorganic particles resulting in a reduced effect to enhance the long-term reliability, and a remarkable effect to improve the electromagnetic conversion characteristics of the magnetic recording media using the materials in question will not be recognizable due to the increased loss factor observed between tape and head.

In connection with the particle diameter of both the inorganic particles 2 and organic particles 3 attached to the surface of the polymer film 1, it is desirable that the particle diameter of the inorganic particles 2 should be larger than that of the organic particles 3 for an enhanced effect to improve the long-term reliability of magnetic recording media.

In connection with the number of particles per unit area for both the inorganic particles 2 and organic particles 3 attached to the surface of the polymer film 1, it is desirable that the number of the organic particles 3 per unit area should be larger than the number of the inorganic particles 2 per unit area since a greater effect in enhancing the long-term reliability of magnetic recording media due to an increased ability of the inorganic particles to disperse can be anticipated.

There are no particular restrictions imposed on the materials for the magnetic film 5, and such ferromagnetic metal compounds as cobalt, nickel, iron, chromium and the like either alone or in the form of an alloy thereof or compounds thereof (an oxide and a nitride, for example) are typically used as the materials for the magnetic film 5.
There are no particular restrictions imposed on the thickness of the magnetic film 5. However, in case where the thin film is formed by a vacuum deposition method, it is desirable that the thickness of the magnetic film 5 should not be less than 30 nm for realizing satisfactory electromagnetic conversion characteristics, and should not be more than 500 nm since cracks tend to be formed as the thickness of the magnetic film 5 increases.

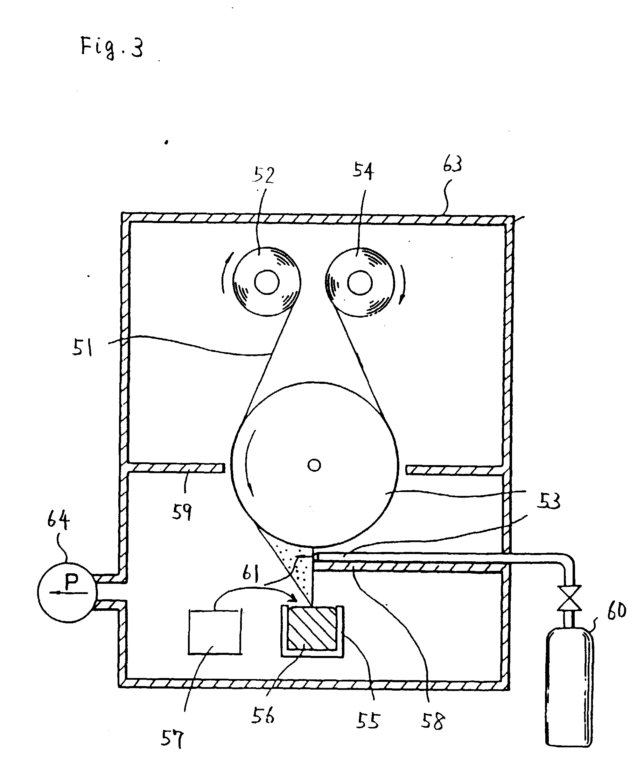

Next, the manufacturing method of the magnetic recording media of the present invention will be explained with the help of Fig. 2 and Fig. 3.

In Fig. 2, a mixed solution comprised of inorganic particles 2 and a solution containing organic particles 3 is coated on the flat surface of a polymer film 1, to which a surface washing process and an electric charge removal process have been sufficiently applied, and then the liquid ingredients thereof are removed to complete a composite polymer film 4.

As the liquid ingredients of the mixed solution are used water, liquids of the alcohol group such as ethyl alcohol or the like, liquids of the benzene group such as toluene, divinyl benzene or the like, liquids of the ketone group such as acetone, methylethyl ketone or the like, liquids of the hydrocarbon group such as butane, hexane or the like, liquids of the ester group such as acetic ethyl ester or the like, and chloroorgano solvents such as chloroform or the like.

One of the mixed solutions is a mixture prepared by dispersing uniformly inorganic particles 2 and organic particles 3 into an organic solvent or water.

As another mixed solution, there is a mixture prepared by first dissolving a solid organic substance in a liquid, and then by having fine organic particles 3 formed through adding a solution, which does not dissolve said organic substance, to the aforementioned liquid, and further adding inorganic particles 2 to the liquid and dispersing the particles.

This method is effective in producing fine organic particles with the particle diameter not exceeding 10 nm.

Fig. 3 shows briefly how the equipment for depositing a metal compound film on the surface of a polymer film is constructed. How to form a magnetic thin film will be explained with the help of Fig. 3.
With deposition equipment 63, a composite polymer film 51 is set to a feed shaft 52 and wound around a winding shaft 54 by way of a rotating cooling can 53.
A magnetic metal 56 is melted by electronic beams 57 in a ceramic melting pot 55.
Item 61 is a nozzle to supply oxygen gas.
The inside of the deposition equipment 63 is exhausted of the air by means of a cryopump 64 and kept at a specified vacuum.
Under the foregoing conditions, a thin film of a magnetic substance is formed by evaporation on the surface of the composite polymer film 51.

In this case, there are two alternatives in the deposition process, namely, a perpendicular vacuum deposition method and an oblique vacuum deposition method.
Also, it is possible to use a chemical vacuum deposition method whereby the surface of the composite polymer film 51 is exposed to oxygen gas 60.
With a chemical vacuum deposition method, cobalt in the form of a vapor flow, for example, is deposited in an oxygen ambient to form a cobalt oxide layer.
One condition imposed by the oblique vacuum deposition method is that the constituent elements existing in the range of 90° to 40 in the incident angle are to be deposited.

Vapor flows of the metals not needed for deposition are eliminated by a mask 58.

Extending of the metal vapor flow to the areas, where the metal vapor is not needed, is prevented by a shielding plate 59.
The vapor pressure at the time of deposition is desired not to exceed 133.3 mPa (1 X 10⁻³ Torr).
When the pressure is higher than this, deposition tends to become unstable.

Further, it is possible for the present invention to have the following modified exemplary embodiment:

The present invention is further characterized by providing a magnetic recording medium comprising a composite polymer film, which is formed of a flat surfaced polymer film, a metal compound thin film disposed on said polymer film surface, and both inorganic particles and organic particles dispersed and attached on the surface of said metal compound thin film, and a magnetic film disposed over said particles which are attached on said metal compound film.

There are no particular restrictions imposed on the metal compound thin film, and such metals as aluminum, titan, silicon, calcium, copper, zinc, vanadium, cobalt, nickel, iron or the like either alone, or in the form of an alloy thereof or a compound thereof (an oxide and a nitride, for example) are typically used as the metal compound thin film.

When the magnetic recording media with the foregoing structure or prepared according to the foregoing manufacturing method are used with video cassette recorders, all the performances such as electromagnetic conversion characteristics, a drop out performance of pictures, and running characteristics of magnetic recording tapes are excellent.
At the same time, the long term reliability to maintain the excellent performances even after repeated use of the magnetic recording tapes is also superior.
Thus, the present invention enables the magnetic recording media to gain the effect of showing a balanced and superior performance on all the characteristics needed of the magnetic recording media.

Next, the present invention will be explained in greater details according to specific exemplary embodiments thereof.

### Example 1

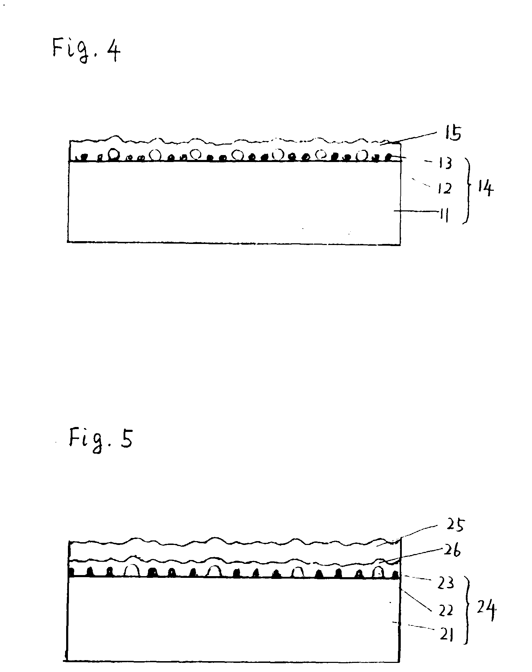

Fig. 4 shows schematically a cross-sectional view of the structure of a magnetic recording medium as a first exemplary embodiment of the present invention.

The flat surface of a tape of polyethyleneterephthalate film measuring 10 µm in thickness and 150 mm in width was coated with a mixed solution which had been prepared by dispersing uniformly polystyrene particles and silicon oxide particles into a solution.
The said mixed solution was prepared according to the steps of dissolving solid polystyrene in a divinylbenzene solution, having fine polystyrene particles formed by adding ethyl alcohol which does not dissolve the polystyrene to said solution, and then adding silicon oxide particles of 8 nm in an average particle diameter thereto so as to have the particles uniformly dispersed in the solution.
In this case, the particle content was 1000 ppm of silicon oxide and 2000 ppm of polystyrene, respectively.
After coating, the solvent was removed by heating at 120 °C, and a composite polymer film 14 with silicon oxide particles 12 and polystyrene particles 13 attached on the surface thereof was obtained.
The mixed solution was coated to a thickness of about 9 nm. The average particle diameter of the polystyrene particles 13 was 5 nm.
The silicon oxide particles 12 were attached in a more exposed manner than the polystyrene particles 13 were.
The number of the particles per one square µm was adjusted to be 20 particles of the silicon oxide particles 12 and around 40 particles of the polystyrene particles 13, respectively.

On the surface of said composite polymer film 14 where the particles 12 and 13 had been attached, an alloy of cobalt (80%) and nickel (20%) was deposited by means of a chemical vacuum deposition method to form a magnetic film 15 of 200 nm in thickness.
A film speed of 10 m/min, an oxygen gas supply of 0.5 l/min, and an evaporation incident angle of 90° to 40° were employed as the conditions for deposition.
By designing the number of nozzles for feeding oxygen gas to be 10, the gas flow was made uniform and constant.
The temperature of the rotating cooling can was kept at 20 C while the deposition process was taking place.

Accordingly, a magnetic recording medium for video cassette recorders, which has a deposited magnetic film 15 with the anisotropy easy axis thereof situated within its surface plane, was produced.

### Sample 1 for Comparison

A magnetic recording medium was prepared by disposing a cobalt-nickel magnetic film on the surface of the same polymer film as used in Example 1 according to the same method as was employed in Example 1.
More specifically, a magnetic recording medium of a structure with neither inorganic particles nor organic particles attached was prepared.

### Example 2

It is possible to make a modified version of the magnetic recording media according to the present invention, which has a nonmagnetic metal compound film disposed on the surface of a composite polymer film prepared by attaching both inorganic particles and organic particles on the surface of a polymer film, and further a magnetic metal film was disposed thereon.
There are no particular restrictions imposed on the nonmagnetic metal compound, but metal compounds of cobalt, nickel, iron and the like (oxides and nitrides, for example) are typically used as the nonmagnetic metal compound.
This exemplary embodiment of the present invention will be explained with the help of Fig. 5.

The flat surface of a tape of polyethyleneterephthalate film measuring 7 µm in thickness was coated with a mixed solution which had been prepared by dispersing uniformly stearic acid cobalt particles and titanium oxide particles into a solution.
The said mixed solution was prepared by the steps of dissolving cobalt stearate in methylethylketone, then having fine particles of cobalt stearate formed by adding hexane to said solution, and further adding titanium oxide particles of 4 nm in an average particle diameter so as to have the particles uniformly dispersed in the solution.

After coating, the solvent was removed by heating at 120 °C, and a composite polymer film with titanium oxide particles and cobalt stearate particles attached on the surface thereof was obtained.

At this time, the mixed solution was coated to a thickness of about 5 nm.
The average particle diameter of the attached cobalt stearate particles was 3 nm.
Besides, the titanium oxide particles 22 were attached in a more exposed manner than the cobalt stearate particles 23 were.
The number of the attached particles per one square µm was adjusted to be 10 particles of the titanium oxide particles 22 and around 30 particles of the cobalt stearate particles 23, respectively.

Then, a nonmagnetic cobalt oxide layer 26 of 20 nm thick was formed on the surface of the composite polymer film 24 thus prepared with the particles 22 and 23 attached on said surface by means of an oblique vacuum deposition method with oxygen gas fed into the metallic vapor flow of cobalt 10 times more in theoretical ratio.
Further, an oxide film of nickel-cobalt alloy was deposited on the surface of said cobalt oxide layer by means of an oblique vacuum deposition method to form a magnetic film 25 of 150 nm thick.

The incident angle of the oblique vacuum deposition ranged from 70° to 20°.
The other conditions for the vacuum deposition were that the deposition speed of the film was 30000 nm/sec, and the temperature of the rotating drum was 80 °C.

Thus, a thin film type perpendicular magnetic recording medium with the anisotropy easy axis placed vertically was produced.

### Sample 2 for Comparison

A magnetic recording medium was prepared first by attaching titanium oxide particles on the surface of the same polymer film as used in Example 2, and then by disposing a cobalt-nickel magnetic film according to the same method as was employed in Example 2 on the surface thereof.
More specifically, a magnetic recording medium of a structure with no organic particles attached was prepared.

### Example 3

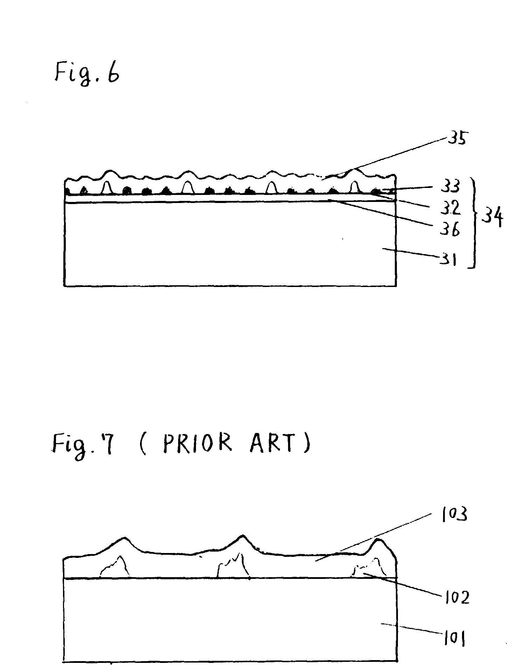

Now, a magnetic recording medium, which was prepared first by disposing a metal compound thin film on the surface of a polymer film, and then by forming a composite polymer film which has inorganic particles and organic particles attached on the metal compound thin film, will be explained as an exemplary embodiment of the present invention with the help of Fig. 6.
According to this structure, the characteristics of magnetic recording media can be further improved when compared with those of the previous examples.

The flat surface of a tape of polyimide film 31 having a thickness of 10 µm was deposited with an aluminum film 36 of 15 nm thick, and then the surface of the aluminum film 36 was coated with a mixed solution, which had been prepared by uniformly dispersing polysulfone particles and silicon oxide particles in a solution.
More specifically, the mixed solution was prepared first by dissolving polysulfone in methylethyl ketone, and then by adding ethanol to form fine particles of polysulfone in the mixture. Following after that, silicon oxide particles of an average particle diameter of 4 nm were added to the mixture to produce the mixed solution wherein particles were uniformly dispersed.

After coating, the solvent was removed by heating at 120 °C, and a composite polymer film with silicon oxide particles 32 and polysufone particles 33 attached on the surface thereof was obtained.

At this time, the mixed solution was coated to a thickness of about 7 nm.
The average particle diameter of the attached polysulfone particles 33 was 3 nm.
Besides, the silicon oxide particles 32 were attached in a more exposed manner than the sulfone particles 33 were.
The number of the attached particles per one square µm was adjusted to be 10 particles of the silicon oxide particles 32 and around 30 particles of the sulfone particles 33, respectively.
Then, a magnetic substance of cobalt-chromium alloy was deposited on the particle attached surface of the composite polymer film 34 by means of a vacuum deposition method as illustrated in Fig. 3 to produce a magnetic film 35 of 180 nm thick. The deposition conditions were that the incident angles at the start of deposition was 0° and at the end of deposition was -20°, respectively, the deposition speed of the magnetic film was 3000 nm/sec, and the temperature of the rotating drum was 250 °C.

Thus, a thin film type perpendicular magnetic recording medium with the anisotropy easy axis placed vertically was produced.

Evaluation tests covering such four items as running characteristics of tapes, electromagnetic conversion characteristics, a drop out performance of outputted pictures, and long-term reliability were conducted on the tapes formed of each respective magnetic recording medium thus prepared using 8 mm type video cassette recorders modified for conducting these particular tests.

Next, an explanation on said tests will be made.
* Evaluation of Running Characteristics
The running characteristics of magnetic recording tapes were evaluated by measuring load current of the tape driving cylinder, and friction coefficient of the rotation guide post for tape driving of a video cassette recorder while the recorder was in operation.
According to the measurement results, the running characteristics of the magnetic recording tapes tested were rated as very excellent by a symbol of ⓞ, excellent by ○, or poor by X.
* Evaluation of Electromagnetic Conversion Characteristics
The electromagnetic conversion characteristics were evaluated by measuring the output (C) and the noise (N) at a recording frequency near 7 MHz on a video cassette recorder while the recorder was in operation, and calculating the ratio C/N.
The ratio C/N obtained with Sample 1 for Comparison was taken as 0 dB and the relative value of the ratio C/N obtained with the tapes under tests against that of Sample 1 for Comparison was examined.
* Evaluation of Drop Out Performance
The drop out performance was evaluated by measuring the number of pictures missing from the reproduced pictures by means of a drop counter.
The number of missing pictures observed with Sample 1 for Comparison was taken as the reference value 1 and the relative value of the missing picture number measured with the tapes under tests against that of Sample 1 for Comparison was examined.
* Evaluation of Long-Term Reliability
The long-term reliability of tapes was evaluated by measuring electromagnetic conversion characteristics and a still picture performance of tapes after repeated use of the tapes.
According to the measurement results, the long-term reliability of the tapes subjected to tests was rated as very excellent by a symbol of ⓞ, excellent by O, or poor by X. The evaluation results are put together in the table below.

| | Running | Electromagnetic Conv. Charact. (dB) | Drop Out | Long-Term Reliability |
|---|---|---|---|---|
| Example 1 | ⓞ | -1 | 1 | ⓞ |
| Sample 1 | X | 0 | 1 | X |
| Example 2 | ⓞ | -0.5 | 0.9 | ⓞ |
| Sample 2 | ○ | -3.5 | 10 | ○ |
| Example 3 | ⓞ | -0.8 | 0.8 | ⓞ |
| Very Excellent: ⓞ Excellent: O Poor: X | | | | |

The analyses of the test results put together in the table are as follows:
* Evaluation by Comparing Example 1 with Sample 1 for Comparison
When the magnetic recording medium of Example 1, wherein a composite polymer film with inorganic particles and organic particles attached on the surface thereof is used, is compared with the magnetic recording medium of Sample 1 for Comparison, wherein a composite polymer film with neither inorganic particles nor organic particles attached on the surface thereof is used, the electromagnetic conversion characteristics of Example 1 are low by 1 dB, the drop out number is equal, and the running performance as well as the long-term reliability are by far excellent.
The difference of 1 dB in the electromagnetic conversion characteristics does not matter much in practice.
Accordingly, the magnetic recording medium of Example 1 can satisfy a variety of the characteristics required of a magnetic recording medium in a well balanced manner.
In contrast, when the magnetic recording medium of Sample 1 for Comparison was used, stopping of magnetic tapes and a disturbance in still pictures occurred while the video cassette recorder used in testing was in operation.
* Evaluation by Comparing Example 2 with Sample 2 for Comparison
When the magnetic recording medium of Example 2, wherein a composite polymer film with inorganic particles and organic particles attached on the surface thereof is used, is compared with the magnetic recording medium of Sample 2 for Comparison, wherein a composite polymer film with neither inorganic particles nor organic particles attached on the surface thereof is used, the magnetic recording medium of Example 2 can satisfy a variety of the characteristics required of a magnetic recording medium in a well balanced manner.
The electromagnetic characteristics of the magnetic recording medium of Example 2 are better than those of Sample 2 for Comparison by 3 dB.
Although the envelope wave form of the output, which makes a measure of uniformity of tape surface, was flat with the case of Example 1 not showing any problems, imperfections were observed with the case of Sample 2 for Comparison.
The envelope wave form affects the drop out of pictures, and missing of as many pictures as 10 times the case of Example 2 was observed.
With regard to the long-term reliability, the case of Example 2 was more excellent than that of Sample 2 for Comparison.
In order to investigate the reasons for this, an observation of the magnetic tape surface was conducted by means of a scanning electron microscope, and an observation of the roughness of the magnetic tape surface was performed by scanning tunneling microscopy.
As a result, it was confirmed that the inorganic particles dispersed better with the case of Example 2 than that of Sample 2 for Comparison, and attachment of fine particles separated from one another without sticking together was observed.
In contrast, in the case of Sample 2 for Comparison, the inorganic particles were stuck together and grown to larger lumps thereof and uneven attachment of said lumps were taking place. Projections of the attached inorganic particles ranged widely over 15 nm to 100 nm in height. Such roughness as this existing on the surface of tapes caused deterioration in the output picture characteristics. In other words, the great unevenness of the tape surface caused imperfections in the envelope wave form, and the abnormal cohesion of particles resulted in drop out of pictures.
In addition, these abnormal projections and cohesion of particles were responsible for scars incurred on the surface of magnetic recording media, and also uneven wear of heads.
As a result, problems involved with running characteristics and long-term reliability were assumedly created.
Accordingly, by coating a mixture of inorganic particles and organic particles with the respective particle diameters different from each other, the particles were dispersed better.
Consequently, the long-term reliability of the magnetic recording media was greatly improved against the repeated use thereof.
* Evaluation by Comparing Example 3 with Example 1, Example 2, and Sample 2 for Comparison
The magnetic recording medium prepared according to the method of Example 3 excelled in taking a good balance of all the characteristics when compared with that prepared by the method of Sample 2 for Comparison.
In connection with the electromagnetic conversion characteristics, it excelled by the margin of 3 dB.
The output envelope wave form was flat and no imperfections were observed.
It showed excellent performances in terms of drop out, running characteristics, long-term reliability, and life in still pictures.
When the magnetic recording medium of Example 3 was compared with the magnetic recording media of Example 1 and Example 2, the inorganic particles were dispersed most extensively according to the observation of the magnetic tape surface by scanning electron microscopy.
As explained in the foregoing, the magnetic recording media and the manufacturing method thereof disclosed by the present invention may contribute to satisfying all the performance requirements made of magnetic recording media in a balanced manner for electromagnetic conversion characteristics, a picture drop out performance, and running characteristics of magnetic recording tapes, and at the same time to maintaining the foregoing excellent performances even after repeated use of the magnetic recording tapes with resultant realization of excellent long-term reliability.

## Claims

1. A magnetic recording medium comprising a composite polymer film (4) formed of a flat surfaced polymer film (1) and both inorganic particles (2) and organic particles (3) dispersed and attached on the surface of said polymer film (1); and a magnetic film (5) disposed on same surface of said composite polymer film (4) as said particles (2,3).

2. A magnetic recording medium comprising a composite polymer film (34) formed of a flat surfaced polymer film (31), a metal compound thin film (36) disposed on the surface of said polymer film (31) and both inorganic particles (32) and organic particles (33) disposed on the surface of said metal compound thin film (36) by uniform dispersion and attachment thereof; and a magnetic film (35) disposed over said particles (32,33) which are attached on the surface of said metal compound film (36).

3. The magnetic recording medium according to Claim 1 or 2, wherein the diameter of said organic particles (3) is smaller than that of said inorganic particles (2).

4. The magnetic recording medium according to Claim 3, wherein the number of said organic particles (3) is larger than that of said inorganic particles (2).

5. The magnetic recording medium according to Claim 3, wherein the particle diameter of the inorganic particles (2) ranges from 3nm to 35nm.

6. The magnetic recording medium according to Claim 3, wherein the particle diameter of the organic particles (3) is smaller than 10nm.

7. The magnetic recording medium according to Claim 1 or 2, wherein the magnetic film (5) is a ferromagnetic metal compound film.

8. A magnetic recording medium comprising a composite polymer film (24) formed of a flat surfaced polymer film (21) and both inorganic particles (22) and organic particles (23) dispersed and attached on the surface of said polymer film (21), a nonmagnetic metal compound (26) disposed over said particles which are formed on the surface of said composite polymer film, and a magnetic film (25) formed on the surface of said nonmagnetic metal compound (26).

9. A manufacturing method of magnetic recording media comprising the steps of disposing inorganic particles (2) and organic particles (3) by uniform dispersion and attachment thereof on the surface of a flat surfaced polymer film (1), and forming a magnetic film (5) over said inorganic particles and organic particles attached on said surface of said polymer film (1).

10. The manufacturing method of magnetic recording media according to Claim 9, wherein the step of disposing the inorganic particles (2) and organic particles (3) by attachment thereof comprises coating the surface of the polymer film (1) with a mixed solution prepared by uniformly dispersing inorganic particles and organic particles into a solution, and then having said solution removed by evaporation.

11. The manufacturing method of magnetic recording media according to Claim 10. wherein said mixed solution is prepared by the steps of dissolving a solid organic substance in a solution, and then adding a solution which does not dissolve the aforementioned organic substance to said solution to produce fine particles of the aforementioned organic substance, and further adding inorganic particles to the solution containing said fine particles of the organic substance.

12. A manufacturing method of magnetic recording media comprising the steps of disposing a metal compound thin film (36) on the surface of a flat surfaced polymer film (31), disposing inorganic particles (32) and organic particles (33) by uniform dispersion and attachment thereof on the surface of said metal compound thin film, and forming a magnetic film (35) over said inorganic particles (32) and organic particles (33) which are attached on the surface of the metal compound film (36).

13. The manufacturing method of magnetic recording media according to Claim 12, wherein the step of disposing the inorganic particles (32) and organic particles (33) by attachment thereof comprises coating the surface of the metal compound thin film (36) with a mixed solution prepared by uniformly dispersing the inorganic particles and organic particles into a solution, and then having said solution removed by evaporation.

14. The manufacturing method of magnetic recording media according to Claim 9 or 12, wherein said magnetic film is formed by means of a vacuum deposition method applied to a magnetic metal compound.

## Patentansprüche

1. Magnetisches Aufzeichnungsmedium, das einen Komposit-Polymerfilm (4), der aus einem flachen, oberflächenbearbeiteten Polymerfilm (1) gebildet ist und sowohl anorganische Partikel (2) als auch organische Partikel (3), dispergiert und auf der Fläche des Polymerfilms (1) angehaftet; und einen magnetischen Film (5), der auf derselben Fläche des Komposit-Polymerfilms (4) wie diese Partikel (2, 3) angeordnet ist, aufweist.

2. Magnetisches Aufzeichnungsmedium, das einen Komposit-Polymerfilm (34), der aus einem flachen, oberflächenbearbeiteten Polymerfilm (31) gebildet ist, einen Metallzusammensetzungs-Dünnfilm (36), der auf der Fläche des Polymerfilms (31) angeordnet ist und sowohl anorganische Partikel (32) als auch organische Partikel (33), angeordnet auf der Fläche des Metallzusammensetzungs-Dünnfilms (36) durch gleichförmige Dispersion und Anhaftung davon angeordnet ist; und einen magnetischen Film (35), der über den Partikeln (32, 33) angeordnet ist, die auf der Fläche des Metallzusammensetzungs-Films (36) angehaftet sind, aufweist.

3. Magnetisches Aufzeichnungsmedium nach Anspruch 1 oder 2, wobei der Durchmesser der organischen Partikel (3) kleiner als derjenige der anorganischen Partikel (2) ist.

4. Magnetisches Aufzeichnungsmedium nach Anspruch 3, wobei die Zahl der organischen Partikel (3) größer als diejenige der anorganischen Partikel (2) ist.

5. Magnetisches Aufzeichnungsmedium nach Anspruch 3, wobei der Partikeldurchmesser der anorganischen Partikel (2) von 3 nm bis 35 nm reicht.

6. Magnetisches Aufzeichnungsmedium nach Anspruch 3, wobei der Partikeldurchmesser der organischen Partikel (3) kleiner als 10 nm ist.

7. Magnetisches Aufzeichnungsmedium nach Anspruch 1 oder 2, wobei der magnetische Film (5) ein ferromagnetischer Metallzusammensetzungsfilm ist.

8. Magnetisches Aufzeichnungsmedium, das einen Komposit-Polymerfilm (24), der aus einem flachen, oberflächenbearbeiteten Polymerfilm (21) gebildet ist und sowohl anorganische Partikel (22) als auch organische Partikel (23), dispergiert und angehaftet auf der Fläche des Polymerfilms (21), eine nicht magnetische Metallzusammensetzung (26), die über den Partikeln angeordnet ist, die auf der Fläche des Komposit-Polymerfilms gebildet ist, und einen magnetischen Film (25), der auf der Fläche der nicht magnetischen Metallzusammensetzung (26) gebildet ist, aufweist.

9. Herstellverfahren magnetischer Aufzeichnungsmedien, das die Schritte eines Anordnens anorganischer Partikel (2) und organischer Partikel (3) durch gleichförmige Dispersion und Anhaftung davon auf der Fläche eines flachen, oberflächenbearbeiteten Polymerfilms (1) und Bilden eines magnetischen Films (5) über die anorganischen Partikel und die organischen Partikel, die auf der Fläche des Polymerfilms (1) angehaftet sind, aufweist.

10. Herstellverfahren magnetischer Aufzeichnungsmedien gemäß Anspruch 9, wobei der Schritt des Anordnens der anorganischen Partikel (2) und der organischen Partikel (3) durch Anhaftung davon ein Beschichten der Fläche des Polymerfilms (1) mit einer gemischten Lösung, die durch gleichförmiges Dispergieren anorganischer Partikel und organischer Partikel in einer Lösung präpariert ist und dann indem die Lösung durch Verdampfung entfernt wird, umfaßt.

11. Herstellverfahren magnetischer Aufzeichnungsmedien gemäß Anspruch 10, wobei die gemischte Lösung durch die Schritte eines Lösens einer festen, organischen Substanz in einer Lösung und dann Hinzufügen einer Lösung, die nicht die vorstehend angegebene, organische Substanz löst, zu der Lösung, um feine Partikel der vorstehend angegebenen organischen Substanz zu produzieren, und weiter Hinzufügen anorganischer Partikel zu der Lösung, die die feinen Partikel der organischen Substanz enthält, präpariert wird.

12. Herstellverfahren magnetischer Aufzeichnungsmedien, das die Schritte eines Anordnens eines Metallzusammensetzungs-Dünnfilms (36) auf der Fläche eines flachen, oberflächenbearbeiteten Polymerfilms (31), Anordnen anorganischer Partikel (32) und organischer Partikel (33) durch gleichförmiges Dispersion und Anhaftung davon auf der Fläche des Metallzusammensetzungs-Dünnfilms und Bilden eines Magnetfilms (35) über den anorganischen Partikeln (32) und den organischen Partikeln (33), die auf der Fläche des Metallzusammensetzungs-Films (36) angehaftet sind, aufweist.

13. Herstellverfahren magnetischer Aufzeichnungsmedien gemäß Anspruch 12, wobei der Schritt des Anordnens anorganischer Partikel (32) und organischer Partikel (33) durch Anhaftung davon ein Beschichten der Fläche des Metallzusammensetzungs-Dünnfilms (36) mit einer gemischten Lösung, die durch gleichförmiges Dispergieren der anorganischen Partikel und der organischen Partikel in einer Lösung präpariert ist und dann indem die Lösung durch Verdampfen entfernt wird, umfaßt.

14. Herstellverfahren magnetischer Aufzeichnungsmedien gemäß Anspruch 9 oder 12, wobei der magnetische Film mittels eines Vakuumniederschlagsverfahrens, das auf einer magnetischen Metallzusammensetzung angewandt wird, gebildet wird.

## Revendications

1. Support d'enregistrement magnétique comprenant un film de polymère composite (4) formé sur un film de polymère à surface plate (1) et à la fois des particules inorganiques (2) et des particules organiques (3) dispersées et attachées à la surface dudit film de polymère (1), et un film magnétique (5) disposé sur la même surface dudit film de polymère composite (4) comme dites particules (2, 3)

2. Support d'enregistrement magnétique comprenant un film de polymère composite (34) formé sur un film de polymère à surface plate (31), un film mince à composé métallique (36) disposé sur la surface dudit film de polymère (31) et à la fois des particules inorganiques (32) et des particules organiques (33) disposées sur la surface dudit film mince à composé métallique (36) par une dispersion et un attachement uniforme de celles-ci ; et un film magnétique (35) disposé sur lesdites particules (32, 33) qui sont attachées à la surface dudit film à composé métallique (36).

3. Support d'enregistrement magnétique selon la revendication 2 ou 3, dans lequel le diamètre desdites particules organiques (3) est plus petit que le diamètre desdites particules inorganiques (2).

4. Support d'enregistrement magnétique selon la revendication 3, dans lequel le nombre desdites particules organiques (3) est supérieur à celui desdites particules inorganiques (2).

5. Support d'enregistrement magnétique selon la revendication 3, dans lequel le diamètre de particule des particules inorganiques (2) s'étend dans l'intervalle de 3 nm à 35 nm.

6. Support d'enregistrement magnétique selon la revendication 3, dans lequel le diamètre de particules des particules organiques (3) est plus petit que 10 nm.

7. Support d'enregistrement magnétique selon la revendication 1 ou 2 dans lequel le film magnétique (5) est un film à composé métallique ferromagnétique.

8. Support d'enregistrement magnétique comprenant un film de polymère composite (24) formé d'un film de polymère à surface plate (21) et à la fois de particules inorganiques (22) et de particules organiques (23) dispersées et attachées à la surface dudit film de polymère (21), un composé métallique non magnétique (26) disposé sur lesdites particules qui sont formées sur la surface dudit film de polymère composite, et un film magnétique (25) formé sur la surface dudit composé métallique non magnétique (26).

9. Procédé de fabrication du support d'enregistrement magnétique comprenant les étapes de dépôt de particules inorganiques (2) et de particules organiques (3) par dispersion uniforme et l'attachement de celles-ci sur la surface d'un film de polymère à surface plate (1), et formation d'un film magnétique (5) sur lesdites particules inorganiques et particules organiques attachées à ladite surface dudit film de polymère (1).

10. Procédé de fabrication du support d'enregistrement magnétique selon la revendication 9, dans lequel l'étape de dépôt de particules inorganiques (2) et de particules organiques (3) par attachement de celles-ci comprend l'enduction de la surface du film de polymère (1) avec une solution mélangée préparée en dispersant uniformément des particules inorganiques et des particules organiques dans une solution, et puis en ayant enlevé la solution par évaporation.

11. Procédé de fabrication du support d'enregistrement magnétique selon la revendication 10, dans lequel ladite solution mélangée est préparée par les étapes de dissolution d'une substance organique solide dans une solution, et puis en ajoutant une solution qui ne dissout pas la substance organique susmentionnée dans ladite solution pour produire des fines particules de la substance organique susmentionnée, et en ajoutant en outre des particules inorganiques à la solution contenant lesdites fines particules de la substance organique.

12. Procédé de fabrication d'un support d'enregistrement magnétique comprenant les étapes de dépôt d'un film mince à composé métallique (36) sur la surface d'un film de polymère à surface plate (31), dépôt de particules inorganiques (32) et de particules organiques (33) avec une dispersion et un attachement uniforme de celles-ci sur la surface dudit film mince à composé métallique, et formation d'un film magnétique (35) sur lesdites particules inorganiques (32) et lesdites particules organiques (33) qui sont attachées à la surface du film à composé métallique (36).

13. Procédé de fabrication d'un support d'enregistrement magnétique selon la revendication 12, dans lequel l'étape de dépôt des particules inorganiques (32) et des particules organiques (33) avec un attachement de celles-ci comprend l'enduction de la surface du film mince à composé métallique (36) avec une solution mélangée préparée en dispersant uniformément les particules inorganiques et les particules organiques dans une solution, et puis ayant ladite solution enlevée par évaporation.

14. Procédé de fabrication du support d'enregistrement magnétique selon la revendication 9 ou 12, dans lequel ledit film magnétique est formé au moyen d'un procédé de dépôt sous vide appliqué à un composé métallique magnétique.
